# FASCICULE DE BREVET EUROPEEN

(11) **EP 3 630 516 B1**
(45) Date de publication et mention de la délivrance du brevet: **07.07.2021**
(21) Numéro de dépôt: 18733930.4
(22) Date de dépôt: 18.05.2018
(51) Int. Cl.: B60J 11/02

(54) **VÉHICULE AUTOMOBILE POURVU D'UN SYSTÈME DE BÂCHE DE PROTECTION**
KRAFTFAHRZEUG MIT EINEM SCHUTZABDECKUNGSSYSTEM
MOTOR VEHICLE PROVIDED WITH A PROTECTIVE COVERING SYSTEM

(30) Priorité: 22.05.2017 FR 1754530
(43) Date de publication de la demande: 08.04.2020
(73) Titulaire: ACPV, 75009 Paris (FR)
(72) Inventeur: SASSI, André, F-92500 Rueil Malmaison (FR); SASSI, Jocelyne, F-92500 Rueil Malmaison (FR)
(74) Mandataire: CAPRI
(86) Numéro de dépôt international: PCT/FR2018/000128
(87) Numéro de publication internationale: WO 2018/215702

(56) Documents cités:
- WO-A1-86/04305
- WO-A1-2009/124467
- WO-A1-2014/128413
- CN-U- 201 922 907
- US-A- 1 804 131

## Description

La présente invention concerne un véhicule automobile, tel qu'une voiture, pourvu d'un système de bâche de protection. Le véhicule comprend une enveloppe externe (telle que la carrosserie), un pare-choc arrière et un pare-choc avant. Le système de protection comprend une bâche souple destinée à recouvrir au moins partiellement l'enveloppe du véhicule pour la protéger en s'étendant de son pare-choc arrière jusqu'à son pare-choc avant. La bâche définit une direction longitudinale qui s'étend dans la longueur du véhicule de l'arrière vers l'avant. En d'autres termes, la bâche est étendue ou tirée dans la direction longitudinale pour recouvrir le véhicule de l'arrière vers l'avant, ou inversement. Par conséquent, le domaine d'application privilégié de la présente invention est celui des voitures particulières, mais on peut également mettre en œuvre la présente invention avec d'autres types de véhicules comme par exemple des véhicules utilitaires, des autocars, des bus, des camions, des remorques, des bateaux, etc.

Il existe déjà depuis longtemps des bâches de protection pour véhicule automobile. Les modèles les plus simples prévoient uniquement une bâche souple que l'on déplie et tire sur le dessus du véhicule pour le recouvrir au moins partiellement. Une fois en place, la bâche peut être fixée au véhicule par diverses techniques, comme par exemple des élastiques, des crochets, etc. Ce type de bâche de protection rudimentaire présente deux inconvénients. Le premier réside dans l'opération de bâchage consistant à étendre la bâche sur le dessus du véhicule. Il faut tourner plusieurs fois autour du véhicule pour positionner correctement la bâche sur le véhicule. L'autre inconvénient réside dans le stockage de la bâche lorsqu'elle n'est pas en utilisation sur le véhicule. Il faut en effet replier la bâche correctement pour qu'elle présente un encombrement minimum. Ce dernier inconvénient est partiellement résolu par des systèmes de bâche de protection plus complexes utilisant un tambour d'enroulement sur lequel la bâche de protection est enroulée en position de stockage. Lorsque l'on veut utiliser la bâche, on la tire par une extrémité libre de manière à dérouler la bâche de son tambour d'enroulement. Ces tambours d'enroulement peuvent être installés à l'avant ou à l'arrière, ou encore sur le toit du véhicule. Il est également possible d'intégrer le tambour d'enroulement à l'intérieur de la malle arrière ou coffre du véhicule. Cependant, même avec un tambour d'enroulement, le système de bâche ne résout pas le problème lié à l'opération de bâchage du véhicule. En effet, il est toujours nécessaire de tirer sur l'extrémité libre de la bâche et de se déplacer pour étendre de manière appropriée la bâche souple sur le dessus du véhicule. En d'autres termes, le tambour d'enroulement est utile et efficace lors de l'opération d'enroulement ou de débâchage du véhicule, mais il n'est absolument d'aucune utilité pour l'opération de déroulement ou bâchage du véhicule.

Dans l'art antérieur, on connaît déjà le document WO2011/004105 qui décrit un système de protection comprenant une bâche pourvue d'éléments raidisseurs, sous la forme de lame métalliques ou de tuyaux gonflables, qui s'étendent sensiblement dans la direction longitudinale pour conférer une certaine raideur à la bâche souple afin de faciliter l'opération de bâchage du véhicule. Un câble de traction monté sur un enrouleur permet de tirer la bâche lors de l'opération de bâchage. Ces éléments raidisseurs augmentent l'épaisseur de la bâche et se révèlent inefficaces, notamment lorsqu'il y a du vent.

On connait aussi le document US4432581 qui décrit un système de bâche de protection comprenant une bâche qui est enroulable sur un tambour motorisé disposé dans le pare-choc arrière. Le bord libre de la bâche est pourvu de deux câbles, fils ou filins reliés à un arbre motorisé de traction disposé dans le pare-choc avant du véhicule. Pour guider la bâche dans la direction longitudinale, sa face inférieure tournée vers la carrosserie est pourvue de deux cornières en T inversé qui viennent chacune en prise dans une série de huit guides à roulettes fixés sur la carrosserie. En activant l'arbre motorisé de traction, les câbles sont tirés et la bâche commence à recouvrir le véhicule tout en étant guidés par les cornières en prise dans les guides. Ce système de bâche de protection souffre de nombreux inconvénients majeurs. Tout d'abord, les cornières augmentent la rigidité de la bâche, d'où une plus grande difficulté à l'enrouler sur le tambour. De plus, les cornières augmentent l'épaisseur de la bâche, d'où un diamètre enroulé plus important. Ensuite, les cornières viennent en contact de frottement avec la carrosserie, d'où une usure de la peinture. Enfin, les deux séries de huit guides fixés sur la carrosserie affecte défavorablement l'esthétique du véhicule.

On connait également le document WO2014/128413 qui décrit un autre système de bâche de protection comprenant une bâche dont le bord libre comprend au moins un élément de traction en matériau ferromagnétique, et le véhicule comprend au moins un aimant mobile déplaçable sous l'enveloppe externe le long d'un chemin de traction qui s'étend dans la direction longitudinale, l'aimant mobile attirant l'élément de traction de la bâche à travers l'enveloppe externe et entraînant avec lui l'élément de traction de la bâche le long du chemin de traction pour amener la bâche en position déroulée de bâchage en glissant sur l'enveloppe externe. Ce système de bâche de protection magnétique souffre cependant aussi de plusieurs inconvénients majeurs. Tout d'abord, l'accrochage magnétique peut parfois s'avérer insuffisant, de sorte que la bâche peut se décrocher. Ensuite, du fait de l'attraction magnétique, la bâche frotte fortement sur la carrosserie, d'où une usure rapide de la peinture. Enfin, ce système magnétique interdit de réaliser la carrosserie en acier, ce qui augmente le coût du véhicule.

Le document CN201922907U divulgue également un véhicule avec un système de bâche de protection.

La présente invention a pour but de remédier aux inconvénients précités de l'art antérieur en définissant un système de bâche de protection plus industrialisé, qui est fiable, efficace, non préjudiciable pour la peinture de la carrosserie et pour l'esthétique du véhicule.

Pour atteindre ces différents buts, le système de bâche de protection de la présente invention propose que le véhicule soit équipé de deux gaines longitudinales qui s'étendent le long de l'enveloppe externe, chaque gaine longitudinale comprenant une fente longitudinale, un coulisseau étant reçu dans chaque gaine longitudinale, chaque coulisseau étant pourvu d'un organe de traction relié au bord libre de la bâche en s'étendant à travers la fente longitudinale, chaque coulisseau étant en outre relié par un câble à la fois à un arbre avant installé au niveau du pare-choc avant du véhicule et à un arbre arrière installé au niveau du pare-choc arrière du véhicule, de sorte la rotation des arbres a pour effet d'enrouler/dérouler le câble qui déplace ainsi le coulisseau dans la gaine longitudinale, lequel coulisseau entraîne la bâche reliée au niveau de son bord libre à l'organe de traction du coulisseau. On peut dire que le système de bâche de protection de la présente invention résulte d'une combinaison synergique des systèmes de bâche de protection des documents US4432581 et WO2014/128413 en conservant tous leurs avantages et en éliminant tous leurs inconvénients. En effet, l'esprit des gaines de guidage longitudinales pour aimant du document WO2014/128413 a été conservé, mais la technique a été améliorée, afin d'éliminer les problèmes liés au décrochage et à l'endommagement de la peinture, en prévoyant la fente longitudinale qui permet de réaliser un accrochage mécanique avec la bâche. Le concept général du guidage mécanique du document US4432581 a été repris, mais il a été amélioré en transférant le guidage longitudinal des cornières à la carrosserie et le guidage ponctuel des deux séries de huit guides de la carrosserie au bord libre de la bâche. Ce faisant, on élimine tous les inconvénients de ces deux systèmes de bâche de protection de l'art antérieur.

Il faut également noter que l'enroulement/déroulement du câble à la fois sur un arbre avant et un arbre arrière permet de déplacer le coulisseau de manière optimale en maintenant la bâche correctement non seulement lors du bâchage, mais également lors du débâchage. En l'absence d'arbre arrière pour le câble, ce serait la bâche qui devrait tirer le coulisseau lors du débâchage, ce qui créerait une tension néfaste sur la bâche. L'enroulement/déroulement du câble sur les deux arbres permet de maintenir une tension contrôlée et constante sur le câble et de déplacer ainsi le coulisseau avec une grande précision, indépendamment de la connexion de la bâche sur le coulisseau.

De plus, la gaine longitudinale est souple et est montée de manière amovible, avantageusement par encliquetage, dans une rainure ou goulotte longitudinale formée par l'enveloppe externe (carrosserie), la gaine longitudinale amovible étant avantageusement équipée de son coulisseau et de son câble. Ainsi, il est possible de remplacer aisément la gaine longitudinale, notamment lorsqu'elle est abimée ou son coulisseau bloqué. Cette opération peut être réalisée par une personne non qualifiée, comme le conducteur du véhicule. En effet, il suffit de défaire le câble des deux arbres et de retirer la gaine longitudinale en l'extirpant de la rainure longitudinale. La nouvelle gaine longitudinale peut alors être mise en place en l'insérant dans la rainure longitudinale, puis en fixant les extrémités du câble aux deux arbres.

De préférence, la gaine longitudinale s'étend majoritairement en-dessous de l'enveloppe externe à l'intérieur du véhicule, de manière à ne faire que très peu ou pas du tout saillie au-dessus de l'enveloppe externe vers l'extérieur du véhicule. En variante non préférentielle, la gaine longitudinale peut aussi s'étendre majoritairement en-dessus de l'enveloppe externe à l'extérieur du véhicule.

Selon une forme de réalisation pratique, la fente longitudinale peut être pourvue d'un système d'obturation qui est forcé dans un état ouvert par l'organe de traction. Il peut s'agir d'un balai ou de deux lèvres jointantes que l'organe de traction déforme lors de son passage.

Selon une caractéristique avantageuse, un système de contrôle gère de manière optimale les enroulements/déroulements simultanés des câbles et de la bâche. De préférence, le système de contrôle comprend un embrayage frein monté sur chaque arbre et un automatisme pour contrôler de manière coordonnée les deux embrayages freins, afin d'ajuster la vitesse d'enroulement/déroulement des câbles et de la bâche, de manière à coordonner le cheminement des coulisseaux dans leurs gaines longitudinales respectives avec l'enroulement/déroulement de la bâche sur le tambour d'enroulement. Ce système permet de veiller à ce que la bâche et les câbles s'enroulent correctement sans créer de décalage (avance ou retard). Le système de contrôle n'aurait pas de sens, si les câbles n'étaient pas reliés à la fois sur l'arbre avant et l'arbre arrière. Les coulisseaux ne suivent pas passivement la bâche lors du débâchage, mais au contraire la guide, afin d'enrouler correctement la bâche et les câbles sur l'arbre arrière.

Selon un autre aspect intéressant de l'invention, une partie de l'arbre arrière, comprenant le tambour d'enroulement avec la bâche enroulée dessus, peut être montée de manière amovible dans le pare-choc arrière, de manière à permettre un remplacement aisé et rapide de la bâche, le pare-choc arrière étant avantageusement équipé d'une trappe d'accès. Ainsi, le conducteur peut remplacer lui-même cette partie d'arbre, en cas de détérioration de la bâche ou de l'arbre.

Selon un aspect pratique, la bâche sort du pare-choc arrière à travers une fenêtre qui est équipée d'un système de brossage pour nettoyer la bâche avant son enroulement.

Selon un autre aspect pratique, la bâche est pourvue d'éléments magnétiques ou ferromagnétiques aptes à coopérer avec des éléments magnétiques ou ferromagnétiques correspondant solidaires du véhicule pour plaquer la bâche sur l'enveloppe externe, l'attraction magnétique étant avantageusement amplifiée par une impulsion électromagnétique de départ.

Selon une autre caractéristique avantageuse de l'invention, le véhicule comprend en outre un système de bâche photovoltaïque similaire ou identique au système de bâche de protection. Ce système optionnel comprend également deux arbres, deux gaines logées dans deux goulottes, deux coulisseaux et deux câbles. Les deux systèmes de bâche sont superposés et peuvent être mis en œuvre indépendamment l'un de l'autre.

L'esprit de l'invention réside dans le fait de tirer et guider simultanément la bâche au moyen d'une gaine fendue qui permet de relier mécaniquement la bâche à un coulisseau qui est déplaçable dans la gaine au moyen d'un câble enroulable.

L'invention sera maintenant plus amplement décrite en référence aux dessins joints donnant à titre d'exemple non limitatif plusieurs modes de réalisation de l'invention.

Sur les figures :
Les figures 1 et 2 est une vue de côté d'un véhicule équipé qu'un système de bâche de protection selon l'invention, respectivement en condition débâchée et en cours de bâchage,
La figure 3 est une vue de dessus du véhicule de la figure 1,
La figure 4 est une vue très schématique du système de bâchage de l'invention,
La figure 5 est une vue en coupe verticale à travers la partie arrière du véhicule montrant le système de l'invention,
La figure 6 est une vue schématique de la bâche de l'invention, et
Les figures 7a et 7b sont des vues en coupe schématiques montrant deux modes de réalisation pour une gaine longitudinale selon l'invention, et
La figure 8 est une représentation très schématique d'un mode de réalisation mettant en œuvre deux systèmes de bâche (de protection et photovoltaïque).

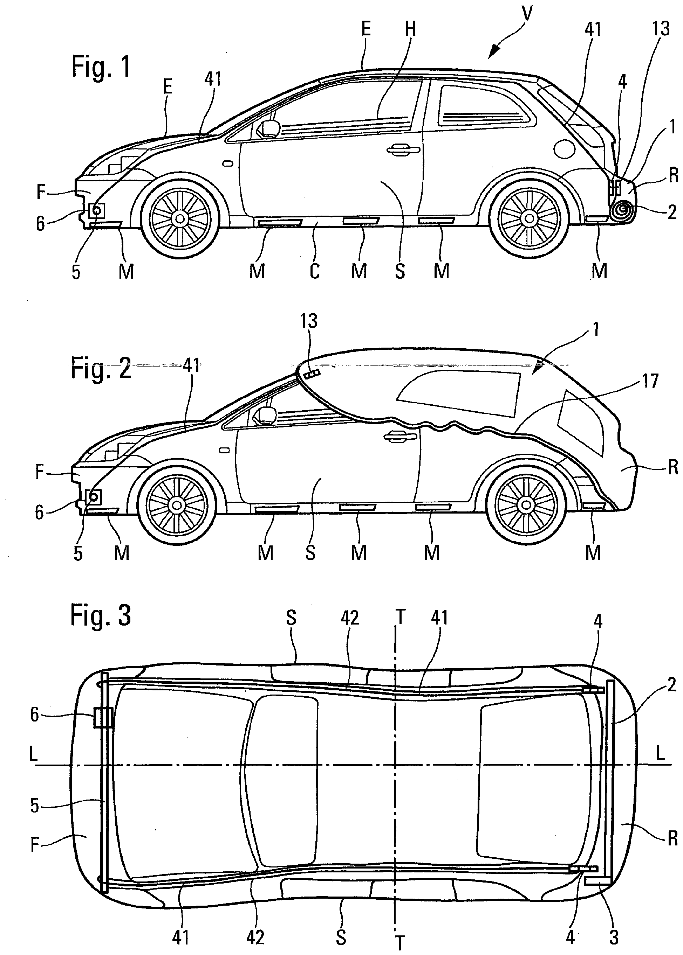

Le système de bâche de protection de la présente invention est destiné à être associé ou intégré à un véhicule automobile, tel qu'une voiture particulière ou encore un véhicule utilitaire, un camion, une remorque, voire un bateau. On peut même envisager d'utiliser le système de bâche de l'invention pour recouvrir d'autres objets, mobiles ou non, et même des constructions, comme par exemple un bassin, une piscine, etc. Sur les figures 1 à 3 qui sont utilisées pour illustrer la présente invention, le système de bâche a été intégré dans un véhicule automobile de type particulier. Ce véhicule V comprend de manière classique un bas de caisse C, plusieurs roues, un moteur, et un habitacle. Le véhicule V comprend également un pare-choc arrière R, une enveloppe externe E et un pare-choc avant F, comme visible sur la figure 1. L'enveloppe externe E du véhicule, destinée à être au moins partiellement bâchée par le système de bâche de l'invention, est essentiellement constituée par la carrosserie qui forme la malle ou hayon arrière, le toit, le capot, les portes et les ailes, ainsi qu'une partie des pare-chocs arrière et avant. L'enveloppe externe E est également constituée de vitres. Le système de bâche de l'invention peut recouvrir la totalité de l'enveloppe externe E, y compris le pare-choc arrière et éventuellement une partie des roues jusqu'à hauteur du bas de caisse. Ceci n'est qu'un exemple de réalisation non limitatif.

Le système de bâche de protection de la présente invention comprend un arbre arrière 2 disposé dans le pare-choc arrière R, une bâche 1 en prise avec l'arbre arrière 2, un arbre avant 5 disposé dans le pare-choc avant F, et deux gaines longitudinales 42 qui s'étendent sensiblement parallèlement du pare-choc arrière R au pare-choc avant F en suivant l'enveloppe externe E. Chaque gaine longitudinale 42 peut par exemple s'étendre à partir du pare-choc avant F le long des ailes avant, à côté du pare-brise, le long du toit, et le long des ailes arrières jusqu'au pare-choc arrière R. Dans chaque gaine longitudinale 42, un coulisseau 4 est monté coulissant, de manière à pouvoir se déplacer sans frottement excessif. Ce coulisseau 4 peut présenter une forme quelconque appropriée, comme par exemple celle d'une navette avec un corps lisse arrondi et deux extrémités effilées. Le coulisseau 4 est pourvu d'un câble de traction 41, que l'on peut également qualifier de fil, filin, cordon, etc. Ce câble 41 s'étend de part et d'autre du coulisseau 4 et peut même le traverser.

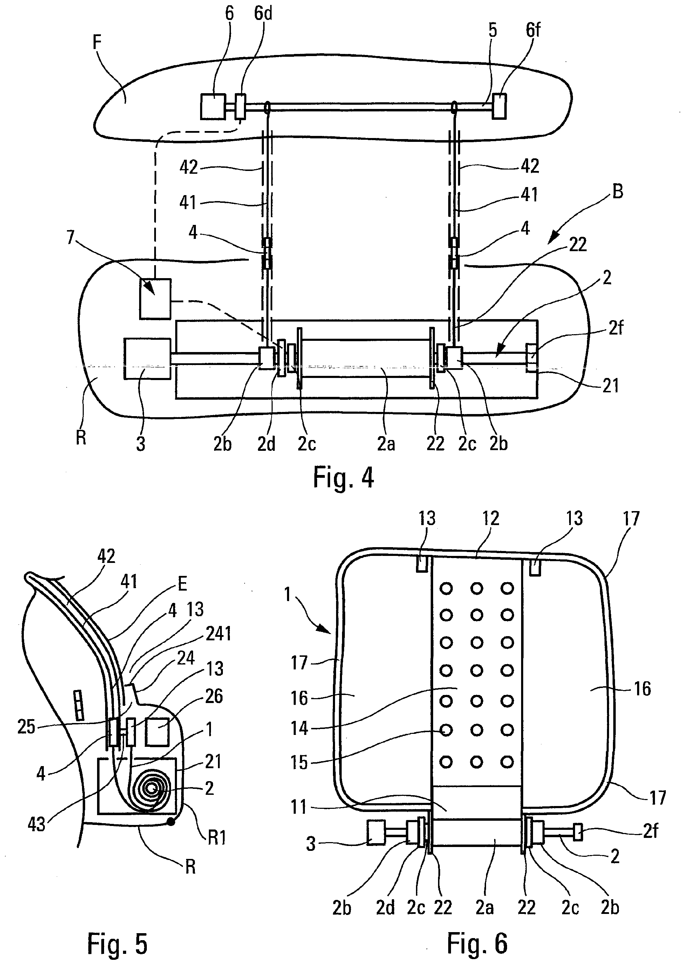

L'arbre arrière 2 comprend, comme visible plus en détail sur la figure 5, un tambour d'enroulement/déroulement de bâche 2a, ainsi que deux bobines d'enroulement/déroulement de câble 2b. L'arbre arrière 2 est entraîné en rotation par un moteur 3, qui est de préférence électrique, et qui est monté à une extrémité de l'arbre 2. L'autre extrémité de l'arbre 2 est montée dans un palier de roue libre 2f, de manière à pourvoir faire tourner l'arbre manuellement, lorsque le moteur est à l'arrêt et débrayé. Une partie centrale de l'arbre arrière 2 comprenant le tambour 2a est avantageusement montée de manière amovible sur deux paliers 2c, de sorte qu'elle puisse facilement être retirée des paliers 2c et extraite du carter 2, et ensuite du pare-choc arrière R à travers une trappe articulée R1, visible sur la figure 5. Cette manipulation peut être effectuée par une personne quelconque, comme le conducteur du véhicule. Cette partie amovible de l'arbre 2 est avantageusement réalisée en matière plastique. Avantageusement, il est également prévu un embrayage frein 2d qui permet de découpler la rotation du tambour 2a de celle des bobines 22b, comme on le verra ci-après. Cet embrayage frein 2d est avantageusement monté sur l'arbre 2 entre la bobine 2b et le palier 2c. Ainsi, la partie amovible de l'arbre 2 se limite au tambour 2a.

L'arbre arrière 2 est logé dans un carter 21 qui définit un espace intérieur suffisant pour accueillir la bâche 1 en condition enroulée. L'arbre arrière 2, son moteur 3 et son carter 21 sont entièrement logés à l'intérieur du pare-choc arrière R, comme visible sur les figures.

Selon l'invention, les deux câbles de traction 41 sont fixés par une de leurs extrémités à l'arbre arrière 2, de sorte qu'ils peuvent s'enrouler et se dérouler de leurs bobines respectives 2b, en fonction du sens de rotation de l'arbre.

La bâche 1 sort du pare-choc arrière R à travers une fenêtre allongée 25 qui est avantageusement pourvue d'un couvercle pivotant 24 munie d'une brosse 241 pour nettoyer la bâche avant son entrée dans le pare-choc arrière R. A la place de cette brosse 241 montée sur le couvercle 24, on peut prévoir n'importe quel système de brossage ou de nettoyage pour retirer les saletés qui se dépose sur la face externe de la bâche 1. L'orientation de la bâche vers l'enveloppe externe E peut en outre être facilitée par le couvercle 24 qui peut servir de déflecteur.

La bâche 1 de l'invention est visible sur la figure 6. Elle peut être réalisée à partir de n'importe quel feuille ou film souple présentant une épaisseur réduite. De nombreux matériaux, notamment plastique, sont appropriés pour la réalisation d'une bâche 1 selon l'invention. Un traitement antiadhésif ou insalissable (par exemple par nanotechnologie) est avantageux. Les dimensions (largeur, longueur) de la bâche sont adaptées en fonction de la taille du véhicule qu'elle doit recouvrir. On peut par exemple prévoir une bâche ayant 5,60 m de longueur sur 3,80 m de largeur. La bâche 1 peut comprendre une zone centrale longitudinale 14 qui est avantageusement pourvue de cellules photovoltaïques 15. Ces cellules 15 sont pleinement efficaces au soleil, mais également à l'ombre avec une luminosité minimum. Cette zone 14 peut s'étendre sur le capot, le pare-brise, le toit et le coffre ou haillon arrière du véhicule. De part et d'autre de cette zone 14, la bâche forme des rabats 16 qui peuvent être plus souples que la zone 14 pourvue des cellules photovoltaïques 15. Ces rabats souples 16 sont destinés à recouvrir les flans ou côtés latéraux du véhicule, et notamment les ailes et les portes. Ces rabats 16 peuvent également être pourvus de moyens de captage de l'énergie solaire, comme par exemple des fibres photovoltaïques.

La bâche 1 comprend un bord de liaison 11 qui est raccordé au tambour rotatif 2b entre les deux flasques 22. On peut remarquer que la largeur de la zone 14 correspond sensiblement à l'écartement des deux flasques 22. Ainsi, la zone 14 s'enroule sur le tambour rotatif 2 entre les flasques 22, alors que les rabats latéraux souples 16 sont enroulés sur - l'arbre rotatif 2 de part et d'autre des flasques 22. Etant donné que la zone 14 est au moins partiellement couverte de cellules photovoltaïques 15, elle présente une rigidité relative plus importante que celle des rabats souples 16. Il est donc avantageux d'enrouler la zone 14 autour du tambour 2 sans la froisser à la manière d'un rouleau. Il importe peu que les rabats 16 soient plus ou moins froncés, car ils présentent une grande souplesse.

La bâche 1 définit également un bord libre 12 qui est opposé au bord de liaison 11. Selon l'invention, ce bord libre 12 est pourvu de deux éléments de fixation 13, comme visible sur la figure 6. Ces deux éléments de fixation 13 peuvent se présenter sous la forme d'un plastron solidement ancré à la bâche et comprenant des moyens de fixation sous la forme d'un logement apte à accueillir une patte ou une lame.

Selon une autre caractéristique intéressante, le pourtour de la bâche 1 est pourvu d'au moins un insert ferromagnétique 17 qui peut par exemple se présenter sous la forme d'un liseré ferromagnétique continu qui est cousu dans un ourlet périphérique de la bâche. Ce liseré est maintenu plaqué contre l'enveloppe externe E au niveau du bas de caisse C du véhicule, et même au niveau des pare-chocs avant et arrière, qui sont pourvus d'aimants fixes M, qui peuvent être des aimants permanents ou encore des électroaimants. Ainsi, les rabats latéraux 16 de la bâche sont maintenus plaqués contre l'enveloppe externe E, même en cas de vent. Dans le cas d'électroaimants, une impulsion de départ de plus forte intensité permet d'augmenter momentanément la force d'attraction magnétique pour aider le liseré à se plaquer contre les aimants fixes M.

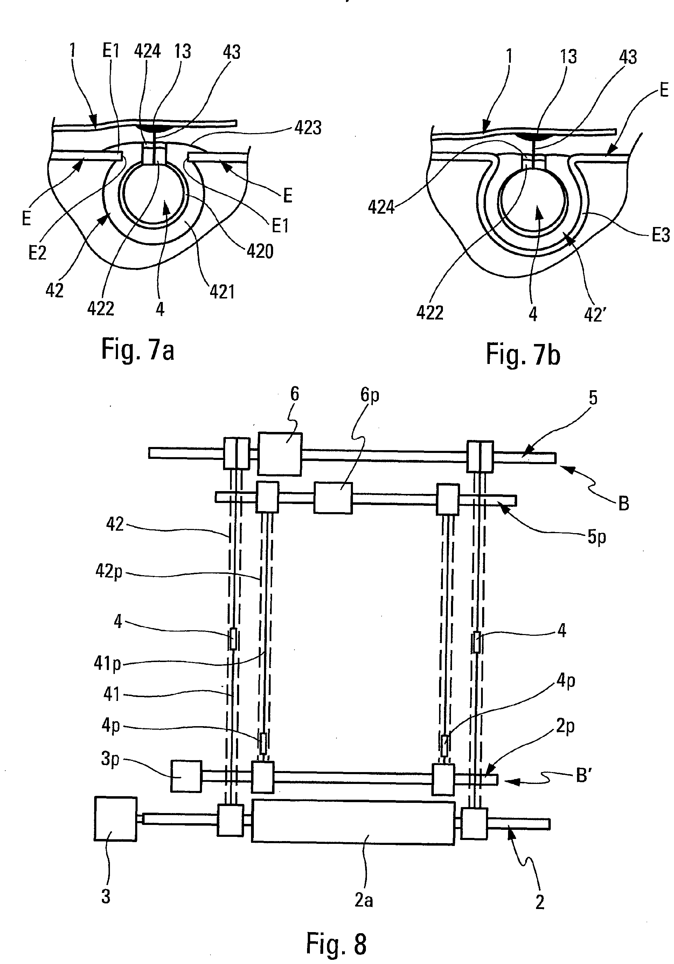

Selon l'invention, les deux éléments de fixation 13 sont reliés respectivement aux deux coulisseaux 4, eux-mêmes respectivement disposés dans les deux gaines longitudinales 42. Plus précisément, chaque gaine longitudinale 42 est fendue sur toute sa longueur, excepté éventuellement au niveau de ses deux extrémités. Ainsi, la gaine longitudinale 42 définit un intérieur creux 420 qui communique avec l'extérieur à travers une fente longitudinale 422 qui débouche sur la face externe de l'enveloppe externe E. La largeur de la fente longitudinale 42 est de préférence minimale pour des raisons esthétiques : elle peut même être inférieure à 1 millimètre. Elle est alors quasiment invisible. Avantageusement, la gaine longitudinale 42 est disposée entièrement ou presque entièrement en-dessous de l'enveloppe externe E, comme on peut le voir sur les figures 7a et 7b.

Sur la figure 7a, l'enveloppe externe E est simplement interrompue de manière à définir deux bords opposés adjacents. La gaine longitudinale 42 forme un corps de gaine 421 qui définit l'intérieur creux 420 et au sommet duquel est formé la fente longitudinale 422. De part et d'autre de la fente 422, la gaine 42 forme deux lèvres 423 qui viennent en appui, avantageusement étanche, sur la face supérieure externe des bords opposés adjacents E1. La gaine longitudinale 42 est ainsi maintenue, notamment par encliquetàge, dans une rainure longitudinale E2 définie entre les deux bords opposés adjacents E1.

Sur la figure 7b, l'enveloppe externe E forme une goulotte longitudinale E3 qui reçoit une gaine longitudinale fendue 42' qui ne fait pas saillie au-dessus de l'enveloppe externe E.

Avantageusement, la fente longitudinale 422 peut être pourvue d'un système d'obturation 424 qui peut se présenter sous la forme d'un balai ou de lèvres jointantes.

Selon l'invention, le coulisseau 4, qui est reçu dans la gaine longitudinale 42, 42', est relié à un élément de fixation 13 de la bâche par un organe de traction 43 qui passe à travers la fente longitudinale 422. Cet organe de traction 43 peut se présenter sous la forme d'une broche, patte, cheville, tige, lame, plaquette, etc. L'organe de traction 43, qui peut être solidaire ou monobloc avec le coulisseau 4, coopère, de manière amovible, avec les moyens de fixation de l'élément de fixation 13, de manière à pouvoir désolidariser la bâche 1 du coulisseau 4.

En position complètement enroulée de stockage, les éléments de fixation 13 peuvent être disposés et maintenus en-dessous de la fenêtre allongée 25 du pare-choc arrière R, comme visible sur la figure 5. La position finale des éléments de fixation 13 dans le pare-choc arrière R peut être déterminée au moyen d'un capteur de proximité ou de présence 26.

Au niveau du pare-choc avant F, l'arbre avant 5 est disposé parallèlement l'arbre arrière 2. Cet arbre 5 est entraîné en rotation sur lui-même par un moteur 6 sur un palier de roue libre 6f. Un embrayage frein 6d est avantageusement prévu sur l'arbre avant 5. Les deux câbles de traction 41 sont fixés par une de leurs extrémités à l'arbre rotatif 5, de sorte qu'ils peuvent s'enrouler et se dérouler de l'arbre avant 5, en fonction de son sens de rotation. Avantageusement, il est prévu un détecteur ou capteur de fin de course pour arrêter l'enroulement les deux câbles 41, lorsque la bâche 1 recouvre entièrement le véhicule.

Ainsi, les coulisseaux 4 sont déplaçables à l'intérieur des gaines longitudinales 42 en enroulant/déroulant les câbles de traction 41 sur les arbres arrière 2 et avant 5, respectivement entraînés par les moteurs 3 et 6. Dans la position de départ de la figure 5, les coulisseaux 4 sont disposés à proximité de la fenêtre longitudinale 25 du pare-choc arrière R. Les éléments de fixation 13 de la bâche 1, qui sont reliés aux coulisseaux par les organes de traction 43, sont également situés juste en-dessous de la fenêtre longitudinale 25. Du fait de cette liaison mécanique directe, le déplacement des coulisseaux 4 entraîne le déplacement des éléments de fixation 13 qui sortent alors du pare-choc arrière R à travers la fenêtre longitudinale 25. Ce faisant, les organes de traction 43 se déplacent dans les fentes longitudinales 422, en repoussant les systèmes d'obturation optionnels 424. Un automatisme 7 est avantageusement prévu pour contrôler de manière coordonnée les deux embrayages freins 2d et 6d, afin d'ajuster la vitesse d'enroulement/déroulement des câbles 41 et de la bâche 1, de manière à coordonner le cheminement des coulisseaux 4 dans leurs gaines longitudinales respectives 42 avec l'enroulement/déroulement de la bâche 1 sur le tambour d'enroulement 2a. Cette coordination est nécessaire afin de ne pas créer de décalage ou retard entre l'enroulement de la bâche et l'enroulement/deroulement des câbles de tractions 41. L'automatisme 8 et les deux embrayages freins 2d et 6d forment ainsi un système de contrôle qui permet de gérer de manière optimale les enroulements/déroulements simultanés des câbles 41 et de la bâche 1. Il est à noter que les deux embrayages freins 2d et 6d pourraient être remplacés par des moteurs variateurs.

L'opération de bâchage se poursuit ainsi jusqu'à ce que les coulisseaux 4 et les éléments de fixation 13 parviennent au niveau du pare-choc avant F. Le véhicule est alors complètement bâché avec les cellules photovoltaïques 15 de la zone centrale 14 déployées sur le dessus du véhicule et les rabats latéraux 16 qui enveloppent les flancs du véhicule. La bâche 1 est ainsi maintenue en place sur le véhicule d'une part par les éléments de fixation 13 reliés aux coulisseaux 4 et d'autre part par les aimants fixes M prévus au niveau du bas de caisse, qui coopèrent avec le liseré ferromagnétique 17.

Lors de l'opération de débâchage, les moteurs 3 et 6 sont à nouveau mis en marche de manière coordonnée de manière à enrouler la bâche 1 et les câbles 41 sur l'arbre 2. Pour ce faire, l'arbre avant 5 doit être entraîné de telle manière à maintenir les câbles de traction 41 avec une tension nulle ou très légère. Les coulisseaux 4 ne remplissent plus une fonction de traction, comme lors de l'opération de bâchage, mais uniquement une fonction de guidage longitudinale, afin que la bâche s'enroule parfaitement sur le tambour 2a sans être désaxée latéralement. Une fois l'opération de débâchage réalisée, on revient dans la configuration représentée sur la figure 5. La fin de l'opération est commandée par le détecteur de proximité 26 qui détecte les éléments de fixation 13.

On peut noter que les éléments de fixation 13 sont toujours situés au-dessus des gaines longitudinales 42, soit hors de contact, soit en contact. Quoi qu'il en soit, les éléments de fixation 13 ne viennent jamais en contact avec l'enveloppe externe E, de sorte qu'il n'y a pas de risque de détérioration par frottement.

Sur la figure 8, on a représenté très schématiquement une version dédoublée, dans laquelle deux systèmes de bâche identique ou similaire sont mis en œuvre de manière imbriquée ou superposée. Un des systèmes de bâche est celui qui vient d'être décrit, c'est-à-dire un système de bâche de protection, mais sans cellule photovoltaïque, et l'autre système de bâche est un système de bâche photovoltaïque. La bâche du système de bâche de protection présente des dimensions comparables à celle de la figure 6, alors que la bâche photovoltaïque présente des dimensions identiques ou similaires à celles de zone centrale 14 de la figure 6. Les deux systèmes de bâche peuvent être actionnés simultanément ou individuellement.

La présente invention a été illustrée avec des modes de réalisation mettant en œuvre deux gaines 42, deux coulisseaux 4, deux éléments de fixation 13 et deux câbles de traction 41. Toutefois, on peut envisager d'autres modes de réalisation avec une seule gaine, ou au contraire plus de deux gaines. Les gaines 42 sont insérées dans des rainures de l'enveloppe externe. Il est cependant envisageable de fixer les gaines sur l'enveloppe externe, par exemple avec de la colle.

Le système de bâche de protection de la présente invention présente ainsi les avantages suivants :
- Traction guidée de la bâche sans risque de détérioration de l'enveloppe externe (peinture de la carrosserie),
- Traction guidée de la bâche avec maintien mécanique et sans surépaisseur de la bâche,
- Gaine (avec coulisseau et câble de traction) amovible et donc remplaçable,
- Arbre arrière (avec bâche enroulée) amovible et donc remplaçable.

Grâce à l'invention, on obtient un système de bâche de protection qui trouve une application simple et industrialisable.

## Revendications

1. Véhicule automobile (V), tel qu'une voiture, définissant une direction longitudinale (L) qui s'étend dans la longueur du véhicule entre un pare-choc arrière (R) et un pare-choc avant (F), le véhicule comprenant une enveloppe externe (E) s'étendant sensiblement d'un pare-choc à l'autre à partir d'un bas de caisse (C), le véhicule étant en outre pourvu d'un système de bâche de protection (B) comprenant une bâche souple (1) destinée à recouvrir au moins partiellement l'enveloppe externe (E) du véhicule (V) pour la protéger, le système comprenant en outre un arbre arrière (2) installé au niveau du pare-choc arrière (R) du véhicule, la bâche (1) étant enroulable autour de cet arbre arrière (2), la bâche (1) comprenant un bord de liaison (11) solidaire de l'arbre arrière (2) et un bord libre (12) opposé, le véhicule (V) étant équipé de deux gaines longitudinales (42) qui s'étendent le long de l'enveloppe externe (E), un coulisseau (4) étant reçu dans chaque gaine longitudinale (42),chaque gaine longitudinale (42) comprenant une fente longitudinale (422), chaque coulisseau (4) étant pourvu d'un organe de traction (43) relié au bord libre (12) de la bâche en s'étendant à travers la fente longitudinale (422), chaque coulisseau (4) étant en outre relié par un câble de traction (41) à la fois à un arbre avant (5) installé au niveau du pare-choc avant (F) du véhicule et à l'arbre arrière (2) installé au niveau du pare-choc arrière (R) du véhicule, de sorte la rotation des arbres avant (5) et arrière (2) a pour effet d'enrouler/dérouler le câble de traction (41) qui déplace ainsi le coulisseau (4) dans la gaine longitudinale (42), lequel coulisseau (4) entraîne la bâche (1) reliée au niveau de son bord libre (12) à l'organe de traction (43) du coulisseau (4) **caractérisé en ce que** la gaine longitudinale (42) est souple et est montée de manière amovible, avantageusement par encliquetage, dans une rainure longitudinale (E2 ; E3) formée par l'enveloppe externe (E),

2. Véhicule selon la revendication 1, dans lequel la gaine longitudinale (42) amovible est équipée de son coulisseau (4) et de son câble (41).

3. Véhicule selon l'une quelconque des revendications précédentes, dans lequel la gaine longitudinale (42) s'étend majoritairement en-dessous de l'enveloppe externe (E) à l'intérieur du véhicule (V), de manière à ne faire que très peu ou pas du tout saillie au-dessus de l'enveloppe externe (E) vers l'extérieur du véhicule (V).

4. Véhicule selon l'une quelconque des revendications précédentes, dans lequel la fente longitudinale (422) est pourvue d'un système d'obturation (424) qui est forcé dans un état ouvert par l'organe de traction (43).

5. Véhicule l'une quelconque des revendications précédentes, dans lequel un système de contrôle (2d, 6d, 8) gère de manière optimale les enroulements/déroulements simultanés des câbles 41 et de la bâche 1.

6. Véhicule selon la revendication 5, dans lequel le système de contrôle comprend un embrayage frein (2d, 6d) monté sur chaque arbre (2, 5) et un automatisme (7) pour contrôler de manière coordonnée les deux embrayages freins (2d,6d), afin d'ajuster la vitesse d'enroulement/déroulement des câbles (41) et de la bâche (1), de manière à coordonner le cheminement des coulisseaux (4) dans leurs gaines longitudinale respectives (42) avec l'enroulement/déroulement de la bâche (1) sur le tambour d'enroulement (2a).

7. Véhicule selon l'une quelconque des revendications précédentes, dans lequel une partie de l'arbre arrière (2), comprenant le tambour d'enroulement (2a) avec la bâche (1) enroulée dessus, est montée de manière amovible dans le pare-choc arrière (R), de manière à permettre un remplacement aisé et rapide de la bâche (1), le pare-choc arrière (R) étant avantageusement équipé d'une trappe d'accès (R1).

8. Véhicule selon l'une quelconque des revendications précédentes, dans lequel la bâche (1) sort du pare-choc arrière (R) à travers une fenêtre (25) qui est équipée d'un système de brossage (241) pour nettoyer la bâche (1) avant son enroulement.

9. Véhicule selon l'une quelconque des revendications précédentes, dans lequel la bâche (1) est pourvue d'éléments magnétiques ou ferromagnétiques (17) aptes à coopérer avec des éléments magnétiques ou ferromagnétiques correspondant (M) solidaires du véhicule (V) pour plaquer la bâche (1) sur l'enveloppe externe (E), l'attraction magnétique étant avantageusement amplifiée par une impulsion électromagnétique de départ.

10. Véhicule selon l'une quelconque des revendications précédentes, comprenant en outre un système de bâche photovoltaïque (B') similaire ou identique au système de bâche de protection (B).

## Patentansprüche

1. Kraftfahrzeug (V) wie etwa ein Personenkraftwagen, das eine Längsrichtung (L) definiert, die sich zwischen einem hinteren Stoßfänger (R) und einem vorderen Stoßfänger (F) über die Länge des Fahrzeugs erstreckt, wobei das Fahrzeug eine äußere Verkleidung (E) aufweist, die sich ausgehend von einem Türschweller (C) im Wesentlichen von einem Stoßfänger zum anderen erstreckt, wobei das Fahrzeug außerdem mit einem Schutzplanensystem (B) versehen ist, das eine nachgiebige Plane (1) umfasst, die dazu bestimmt ist, die äußere Verkleidung (E) des Fahrzeugs (V) wenigstens teilweise abzudecken, um sie zu schützen, wobei das System außerdem eine hintere Welle (2) umfasst, die auf Höhe des hinteren Stoßfängers (R) des Fahrzeugs installiert ist, wobei die Plane (1) um diese hintere Welle (2) gewickelt werden kann, wobei die Plane (1) einen mit der hinteren Welle (2) fest verbundenen Verbindungsrand (11) und einen gegenüberliegenden freien Rand (12) besitzt, wobei das Fahrzeug (V) mit zwei longitudinalen Hülsen (42) ausgestattet ist, die sich längs der äußeren Verkleidung (E) erstrecken, wobei in jeder longitudinalen Hülse (42) ein Gleitelement (4) aufgenommen ist, wobei jede longitudinale Hülse (42) einen longitudinalen Schlitz (422) aufweist, wobei jedes Gleitelement (4) mit einem mit dem freien Rand (12) der Plane verbundenen Zugorgan (43) versehen ist, das durch den longitudinalen Schlitz (422) verläuft, wobei jedes Gleitelement (4) außerdem durch ein Zugseil (41) sowohl mit einer vorderen Welle (5), die auf Höhe des vorderen Stoßfängers (F) des Fahrzeugs installiert ist, als auch mit der hinteren Welle (2), die auf Höhe des hinteren Stoßfängers (R) des Fahrzeugs installiert ist, verbunden ist, derart, dass die Drehung der vorderen Welle (5) und der hinteren Welle (2) zur Folge hat, dass das Zugseil (41) aufgewickelt/abgewickelt wird und somit das Gleitelement (4) in der longitudinalen Hülse (42) verschiebt, wobei das Gleitelement (4) die Plane (1), die auf Höhe ihres freien Randes (12) mit dem Zugorgan (43) des Gleitelements (4) verbunden ist, antreibt, **dadurch gekennzeichnet, dass** die longitudinale Hülse (42) nachgiebig ist und in einer longitudinalen Rille (E2; E3), die in der äußeren Verkleidung (E) gebildet ist, lösbar, vorzugsweise durch Einrasten, montiert ist.

2. Fahrzeug nach Anspruch 1, wobei die lösbare longitudinale Hülse (42) mit ihrem Gleitelement (4) und mit ihrem Seil (41) ausgestattet ist.

3. Fahrzeug nach einem der vorhergehenden Ansprüche, wobei sich die longitudinale Hülse (42) hauptsächlich unter der äußeren Verkleidung (E) im Inneren des Fahrzeugs (V) erstreckt, derart, dass sie nur sehr wenig oder überhaupt nicht über die äußere Verkleidung (E) in die äußere Umgebung des Fahrzeugs (V) vorsteht.

4. Fahrzeug nach einem der vorhergehenden Ansprüche, wobei der longitudinale Schlitz (422) mit einem Verschlusssystem (424) versehen ist, das durch das Zugorgan (43) in den offenen Zustand gedrängt wird.

5. Fahrzeug nach einem der vorhergehenden Ansprüche, wobei ein Steuersystem (2d, 6d, 8) das gleichzeitige Aufwickeln/Abwickeln der Seile (41) und der Plane (1) optimal steuert.

6. Fahrzeug nach Anspruch 5, wobei das Steuersystem eine Bremskupplung (2d, 6d), die an jeder Welle (2, 5) montiert ist, und einen Automatismus (7) zum koordinierten Steuern der beiden Bremskupplungen (2d, 6d) umfasst, um die Aufwicklungs-/Abwicklungsgeschwindigkeit der Seile (41) und der Plane (1) einzustellen, derart, dass die Fortbewegung der Gleitelemente (4) in ihren jeweiligen longitudinalen Hülsen (42) beim Aufwickeln/Abwickeln der Plane (1) auf die bzw. von der Aufwicklungstrommel (2a) koordiniert wird.

7. Fahrzeug nach einem der vorhergehenden Ansprüche, wobei ein Teil der hinteren Welle (2), der die Aufwicklungstrommel (2a) mit der darauf gewickelten Plane (1) umfasst, in dem hinteren Stoßfänger (R) lösbar montiert ist, derart, dass ein einfacher und schneller Austausch der Plane (1) ermöglicht wird, wobei der hintere Stoßfänger (R) vorteilhaft mit einer Zugangsklappe (R1) ausgestattet ist.

8. Fahrzeug nach einem der vorhergehenden Ansprüche, wobei die Plane (1) aus dem hinteren Stoßfänger (R) durch ein Fenster (25) austritt, das mit einem Bürstensystem (241) ausgestattet ist, um die Plane (1) während ihres Aufwickelns zu reinigen.

9. Fahrzeug nach einem der vorhergehenden Ansprüche, wobei die Plane (1) mit magnetischen oder ferromagnetischen Elementen (17) versehen ist, die dafür ausgelegt sind, mit entsprechenden magnetischen oder ferromagnetischen Elementen (M), die mit dem Fahrzeug (V) fest verbunden sind, zusammenzuwirken, um die Plane (1) auf die äußere Verkleidung (E) zu drücken, wobei die magnetische Anziehung vorteilhaft durch einen elektromagnetischen Startimpuls verstärkt wird.

10. Fahrzeug nach einem der vorhergehenden Ansprüche, das außerdem ein photovoltaisches Planensystem (B') umfasst, das zu dem Schutzplanensystem (B) ähnlich ist oder mit ihm identisch ist.

## Claims

1. A motor vehicle (V), such as a car, defining a longitudinal direction (L) that extends over the length of the vehicle between a rear bumper (R) and a front bumper (F), the vehicle including an outer body (E) that extends substantially from one bumper to the other starting from a sill (C), the vehicle also being provided with a protective tarpaulin system (B) comprising a flexible tarpaulin (1) for covering the outer body (E) of the vehicle (V) at least in part so as to protect it, the system further comprising a rear shaft (2) that is installed at the rear bumper (R) of the vehicle, the tarpaulin (1) being windable around the rear shaft (2), the tarpaulin (1) including a connection edge (11) that is secured to the rear shaft (2), and an opposite edge (12) that is free, the vehicle (V) being fitted with two longitudinal sheaths (42) that extend along the outer body (E), a slider (4) being received in each longitudinal sheath (42), each longitudinal sheath (42) including a longitudinal slot (422), each slider (4) being provided with a traction member (43), that is connected to the free edge (12) of the tarpaulin and that extends through the longitudinal slot (422), each slider (4) also being connected via a traction cable (41) both to a front shaft (5) that is installed at the front bumper (F) of the vehicle, and also to the rear shaft (2) that is installed at the rear bumper (R) of the vehicle, so that rotating the front and rear shafts (5, 2) causes the traction cable (41) to be wound and unwound, thereby moving the slider (4) in the longitudinal sheath (42), which slider (4) entrains the tarpaulin (1) that is connected at its free edge (12) to the traction member (43) of the slider (4) **characterized in that** the longitudinal sheath (42) is flexible and is mounted in removable manner, advantageously by snap-fastening, in a longitudinally-extruding gap (E2; E3) formed by the outer body (E).

2. A vehicle according to claim 2, wherein the removable longitudinal sheath (42) is fitted with its slider (4) and with its cable (41).

3. A vehicle according to any preceding claim, wherein the longitudinal sheath (42) extends mainly under the outer body (E) inside the vehicle (V), so as to project very little, if at all, from the outer body (E) towards the outside of the vehicle (V).

4. A vehicle according to any preceding claim, wherein the longitudinal slot (422) is provided with a closure system (424) that is forced into an open state by the traction member (43).

5. A vehicle according to any preceding claim, wherein a control system (2d, 6d, 8) controls, in optimum manner, the winding and unwinding of the cables 41 and of the tarpaulin 1 simultaneously.

6. A vehicle according to claim 6, wherein the control system comprises a clutch-brake (2d, 6d) that is mounted on each shaft (2, 5) and an automatic controller (7) for controlling in coordinated manner the two clutch-brakes (2d, 6d), so as to adjust the winding and unwinding speeds of the cables (41) and of the tarpaulin (1) in such a manner as to coordinate the travel of the sliders (4) in their respective longitudinal sheaths (42) with the winding and unwinding of the tarpaulin (1) on the winding drum (2a).

7. A vehicle according to any preceding claim, wherein a portion of the rear shaft (2), comprising the winding drum (2a) with the tarpaulin (1) wound thereon, is mounted in removable manner in the rear bumper (R), so as to make it possible to replace the tarpaulin (1) easily and quickly, the rear bumper (R) advantageously being fitted with an access flap (R1).

8. A vehicle according to any preceding claim, wherein the tarpaulin (1) leaves the rear bumper (R) through an opening (25) that is fitted with a brushing system (241) for cleaning the tarpaulin (1) before it is wound in.

9. A vehicle according to any preceding claim, wherein the tarpaulin (1) is provided with magnetic or ferromagnetic elements (17) that are suitable for co-operating with corresponding magnetic or ferromagnetic elements (M) that are secured to the vehicle (V) so as to flatten the tarpaulin (1) against the outer body (E), the magnetic attraction advantageously being amplified by an electromagnetic start pulse.

10. A vehicle according to any preceding claim, further comprising a photovoltaic tarpaulin system (B') that is similar or identical to the protective tarpaulin system (B).
